# EUROPÄISCHE PATENTSCHRIFT

(11) **EP 1 960 695 B1**
(45) Veröffentlichungstag und Bekanntmachung des Hinweises auf die Patenterteilung: **15.04.2009**
(21) Anmeldenummer: 06819707.8
(22) Anmeldetag: 23.11.2006
(51) Int. Cl.: F16H 23/10, F04B 1/14

(54) **TAUMELSCHEIBENGETRIEBE**
SWASH PLATE MECHANISM
TRANSMISSION A PLATEAU OSCILLANT

(30) Priorität: 06.12.2005 DE 102005058071
(43) Veröffentlichungstag der Anmeldung: 27.08.2008
(73) Patentinhaber: Schaeffler KG, 91074 Herzogenaurach (DE)
(72) Erfinder: BAUER, Jörg, 91056 Erlangen (DE); NUISSL, Christian, 90439 Nürnberg (DE); OETJEN, Jürgen, 91074 Herzogenaurach (DE); STÖLZLE, Jürgen, 73441 Bopfingen (DE)
(86) Internationale Anmeldenummer: PCT/EP2006/068818
(87) Internationale Veröffentlichungsnummer: WO 2007/065799

(56) Entgegenhaltungen:
- DE-A1- 1 775 637
- DE-A1- 10 237 557
- DE-A1- 10 357 084
- DE-C- 303 937
- DE-U1- 9 112 170

## Beschreibung

### Gebiet der Erfindung

Die Erfindung betrifft ein insbesondere für Axialkolbenpumpen geeignetes Taumelscheibengetriebe, welches einen Taumelkörper aufweist, der zwischen einer Taumelscheibe und einer Gehäusescheibe drehbar gelagert ist, entsprechend dem Oberbegriff des Anspruches 1.

### Hintergrund der Erfindung

Ein Taumelscheibengetriebe der eingangs genannten Art ist beispielsweise aus der DE 103 57 084 A1 bekannt. Dieses Taumelscheibengetriebe weist zwei Kugelkränze auf, nämlich einen Axial-Kugelkranz sowie einen Taumel-Kugelkranz, welche zwischen Taumelkörper und Gehäusescheibe bzw. zwischen Taumelkörper und Taumelscheibe angeordnet sind. Der bekannte Taumelkörper ist als Blechumformteil ausgebildet und weist spanlos eingeformte Kugellaufrillen auf, auf welchen die Kugeln der Kugelkränze abrollen. Dank des direkt mit dem Axial-Kugelkranz sowie mit dem Taumel-Kugelkranz in Kontakt befindlichen Taumelkörpers weist das Taumelscheibengetriebe nach der DE 103 57 084 A1 nur eine geringe Zahl an Einzelteilen auf. Diese Einzelteile, nämlich die Gehäusescheibe, der Axial-Kugelkranz, der Taumelkörper, der Taumel-Kugelkranz und die Taumelscheibe, sind innerhalb des das Taumelscheibengetriebe aufweisenden Gerätes, insbesondere einer Axialkolbenpumpe, dazu vorgesehen, eine Anzahl an Abtriebselementen, insbesondere Kolben, welche die Taumelscheibe kontaktieren, in oszillierende Bewegungen zu versetzen.

### Aufgabe der Erfindung

Der Erfindung liegt die Aufgabe zugrunde, ein insbesondere für Axialkolbenpumpen geeignetes Taumelscheibengetriebe anzugeben, welches sich besonders durch eine hohe Montagefreundlichkeit auszeichnet.

### Zusammenfassung der Erfindung

Diese Aufgabe wird erfindungsgemäß gelöst durch ein Taumelscheibengetriebe mit den Merkmalen des Anspruchs 1. Dieses Taumelscheibengetriebe weist einen Taumelkörper auf, der drehbar zwischen einer Taumelscheibe und einer Gehäusescheibe gelagert ist. Die Taumelscheibe bildet einen Lageraußenring eines ersten Wälzlagers, während die Gehäusescheibe einen Lageraußenring eines zweiten Wälzlagers bildet, dessen Form mit der Form des ersten Wälzlagers identisch ist. Weiter weist jedes Wälzlager einen mit dem jeweiligen Lageraußenring unverlierbar gekoppelten Lagerinnenring auf, der an der Taumelscheibe befestigt ist. Somit ist die Gesamtheit der beiden Lageraußenringe, der beiden Lagerinnenringe und des Taumelkörpers zu einer Baueinheit zusammengefasst, welche gegen Auseinanderfallen, etwa während des Transports oder bei der Montage, gesichert ist. Auch die jeweils zwischen einem Lageraußenring und einem Lagerinnenring geführten Wälzkörper der beiden gleichartigen Wälzlager sind, insbesondere durch die Form der Lageraußenringe, gegen Herausfallen gesichert. Die übereinstimmende Form der beiden Wälzlager des Taumelscheibengetriebes führt zu einer bedeutsamen Verringerung des Fertigungs- und Montageaufwands.

Als Wälzlager des Taumelscheibengetriebes werden bevorzugt Axialschrägkugellager eingesetzt. Diese sind hauptsächlich zur Aufnahme von Kräften in Axialrichtung bestimmt, nehmen jedoch auch Belastungen in Radialrichtung auf.

Somit bleibt das Taumelscheibengetriebe stets zentriert, das heißt es tritt unter keinen Bedingungen eine radiale Verlagerung einzelner Scheiben des Taumelscheibengetriebes auf. Der Druckwinkel der Axialschrägkugellager beträgt vorzugsweise mindestens 45° und höchstens 75°, beispielsweise 60°.

In fertigungstechnisch besonders günstiger Weise sind die Lagerinnen- und - außenringe bevorzugt als spanlos umgeformte Blechteile ausgebildet. Die sich direkt am Taumelkörper abstützenden Lagerinnenringe können wesentlich dünnwandiger sein als ein mit dem Taumelkörper identischer Lagerring, wie etwa der aus der DE 103 57 084 A1 bekannte Taumelkörper.

Der Taumelkörper, an welchem die Lagerinnenring starr befestigt sind, ist vorzugsweise aus Kunststoff gefertigt. Alternativ ist auch eine Herstellung aus Leichtmetall, insbesondere aus einer Aluminiumlegierung, möglich. Der Taumelwinkel des Taumelkörpers, d.h. der Schrägstellungswinkel der Taumelscheibe gegenüber der Rotationsachse des Taumelkörpers, beträgt in bevorzugter Ausgestaltung mindestens 4° und höchstens 15°. Vorzugsweise weist der Taumelkörper ein Innenprofil, insbesondere ein Innensternprofil auf, das formschlüssig mit einer insbesondere elektromotorisch angetriebenen Welle zusammenwirkt.

Die Wälzlager des Taumelscheibengetriebes, d.h. das um den Taumelwinkel geneigt angeordnete erste Wälzlager mit der Taumelscheibe als Lageraußenring sowie das symmetrisch zur Rotationsachse des Taumelkörpers angeordnete zweite Wälzlager mit der Gehäusescheibe als Lageraußenring, sind vorzugsweise als vollkugelige Lager, d.h. als Lager ohne die Wälzkörper führende Käfige, ausgebildet. Im Vergleich zu Wälzlagern mit Käfigen weisen solche Lager eine erhöhte Anzahl an Wälzkörpern auf, so dass die einzelnen Wälzkörper, nämlich Kugeln, kleiner dimensioniert werden können. Weiter ist damit eine bessere Abstützung sowie eine geringere Verformung des Außenrings gegeben. Der Durchmesser jedes Wälzkörpers des Wälzlagers beträgt vorzugsweise weniger als 10% des Teilkreisdurchmessers des Wälzlagers, wobei unter dem Teilkreisdurchmesser der Durchmesser des Kreises verstanden wird, auf dem die Mittelpunkte der Wälzkörper liegen.

Nach einer vorteilhaften Ausgestaltung weisen die Lageraußenringe außenseitig einen konkaven, in axialer Draufsicht ringförmigen Oberflächenbereich auf. Diese Gestaltung erhöht zum einen die Stabilität des Lageraußenrings, wodurch dieser besonders dünnwandig gestaltet werden kann. Zum anderen ist der konkave Oberflächenbereich besonders dazu geeignet, eine Anlagefläche für ein Abtriebselement des Taumelscheibengetriebes, insbesondere für einen Kolben einer Axialkolbenpumpe, zu bilden. Der Krümmungsradius des konkaven Oberflächenbereichs beträgt vorzugsweise weniger als 25% des Teilkreisdurchmessers des Wälzlagers. Damit sind Lageraußenringe mit identischer Form für Taumelkörper mit unterschiedlichen Taumelwinkeln geeignet, wobei bei jedem beliebigen Taumelwinkel Abtriebselemente einheitlicher Form zum Einsatz kommen können. Eine Anpassung der mit dem Lageraußenring zusammenwirkenden Gleitfläche des Abtriebselementes auf den Taumelwinkel des Taumelscheibengetriebes ist dank des in einem ringförmigen Oberflächenbereich konkav gewölbten Lageraußenrings nicht erforderlich. Die konkave Gestaltung des Lageraußenrings hat darüber hinaus den Vorteil, dass die Hertzschen Pressungen zwischen dem Lageraußenring und dem Abtriebselement im Vergleich zu einem herkömmlichen Lageraußenring mit ebener Oberfläche deutlich reduziert sind. Nach einer alternativen Ausgestaltung, die vergleichbare vorteilhafte Effekte erzielt, ist die Außenoberfläche des Lageraußenrings konvex geformt, während die auf dem Lageraußenring aufliegenden Stirnflächen der Abtriebselemente eben sind. Diese Gestaltung hat den zusätzlichen Vorteil, dass die Abtriebselemente besonders rationell herstellbar sind.

Nach einer montagetechnisch besonders vorteilhaften Ausführungsform sind die Lagerinnenringe der Wälzlager jeweils mittels einer Schnappverbindung mit dem Taumelkörper verbunden. Hierbei weist der bevorzugt aus Kunststoff gefertigte Taumelkörper in vorteilhafter Ausgestaltung eine einstückig angeformte Haltenase auf, welche ein Teil der Schnappverbindung mit dem Lagerinnenring bildet.

Vorzugsweise ist zur Verbindung des Lagerinnenrings mit dem Lageraußenring eine Schnappverbindung vorgesehen, welche die beiden Lagerringe drehbar, jedoch unverlierbar miteinander verbindet. Hierbei weist in besonders vorteilhafter Ausgestaltung der Lagerinnenring mindestens einen Schnapphaken auf, der zugleich der nicht drehbaren Halterung des Lagerinnenrings auf dem Taumelkörper dient.

Nachfolgend wird ein Ausführungsbeispiel der Erfindung anhand einer Zeichnung näher erläutert. Hierin zeigen:

### Kurze Beschreibung der Zeichnung

- Figur 1: ausschnittsweise einen Querschnitt einer Axialkolbenpumpe mit einem Taumelscheibengetriebe,
- Figur 2 a und b: in einem Schnitt bzw. in Draufsicht ein für die Axialkolbenpumpe nach Figur 1 geeignetes Taumelscheibengetriebe, und
- Figur 3: in einer Explosionsdarstellung das Taumelscheibengetriebe nach Figur 2 a und b.

### Ausführliche Beschreibung der Zeichnung

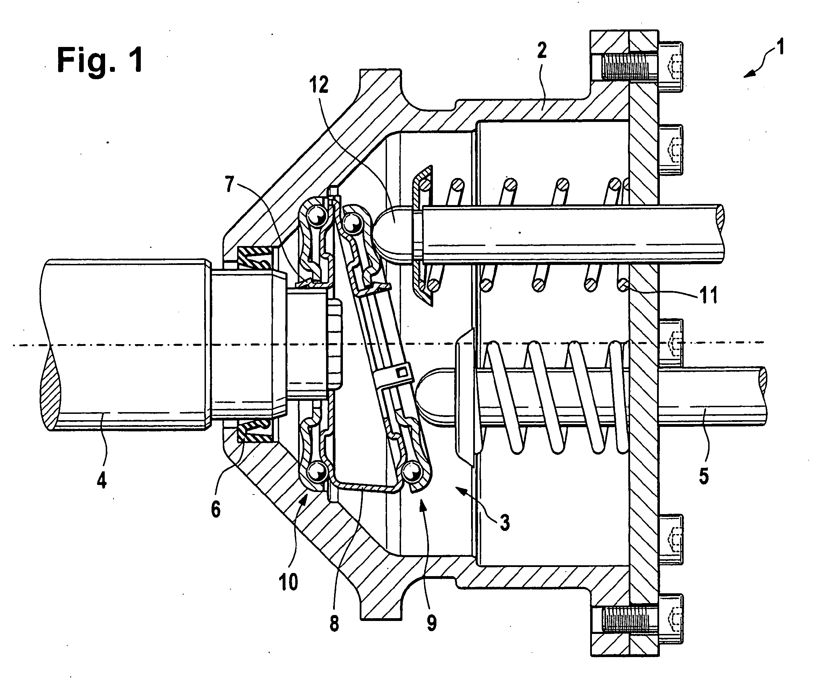

Die Figur 1 zeigt ausschnittsweise eine Axialkolbenpumpe 1, deren prinzipielle Funktion beispielsweise aus der DE 197 38 813 B4 bekannt ist. Die Axialkolbenpumpe 1 ist insbesondere für den Einsatz in einem Hochdruckreinigungsgerät geeignet. In einem Pumpengehäuse 2 der Axialkolbenpumpe 1 ist ein Taumelscheibengetriebe 3 angeordnet, welches die rotierende Bewegung einer motorisch angetriebenen Welle 4 in Hubbewegungen dreier Kolben 5 als Abtriebselemente umsetzt. Zur Abdichtung der Welle 4 gegenüber dem Pumpengehäuse 2 ist ein Dichtring 6 vorgesehen. Die Welle 4, welche mit einem Motorzapfen des elektromotorischen Antriebs der Axialkolbenpumpe 1 identisch ist, weist einen profilierten Wellenzapfen 7 auf, der in einen Taumelkörper 8 des Taumelscheibengetriebes 3 eingreift. Der Taumelkörper 8 ist mittels eines ersten Wälzlagers 9 sowie eines zweiten Wälzlagers 10 drehbar innerhalb des Taumelscheibengetriebes 3 gelagert. Die Kolben 5 sind mittels als Schraubenfedern ausgebildeter Druckfedern 11 gegen das Taumelscheibengetriebe 3 angefedert, wobei halbkugelig geformte Fußstücke 12 der Kolben 5 eine axiale Kraft auf das erste Wälzlager 9 ausüben.

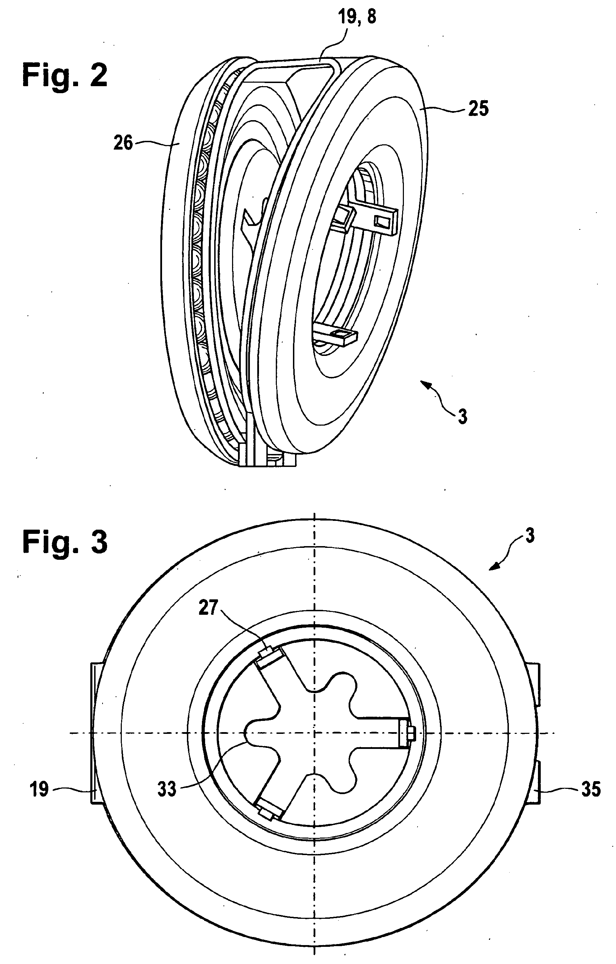

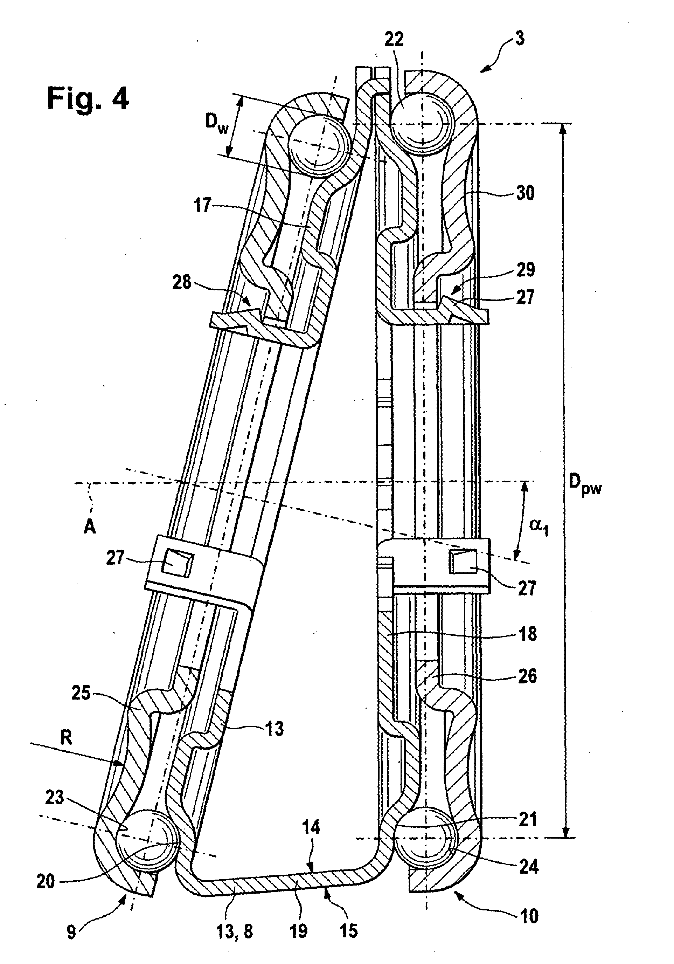

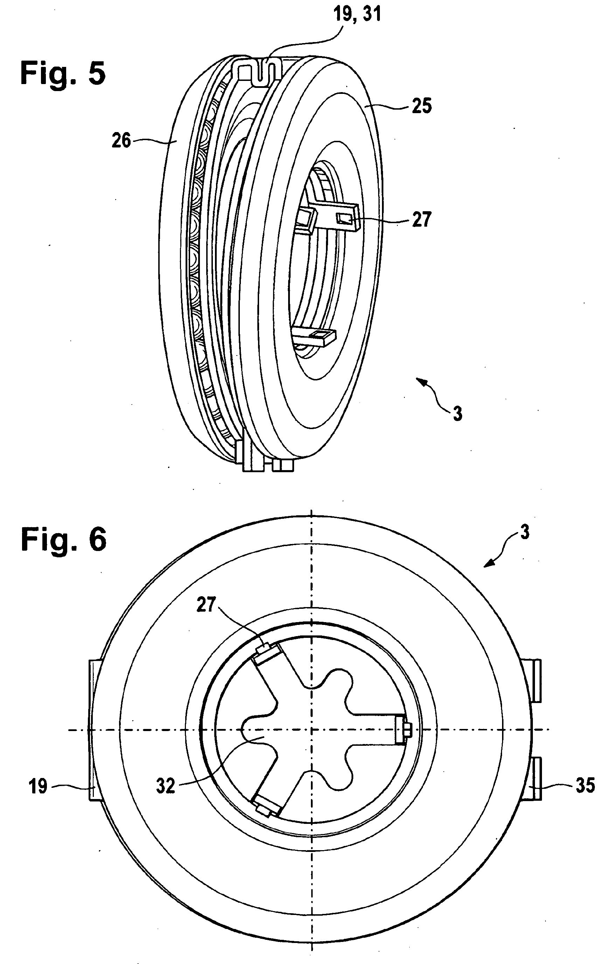

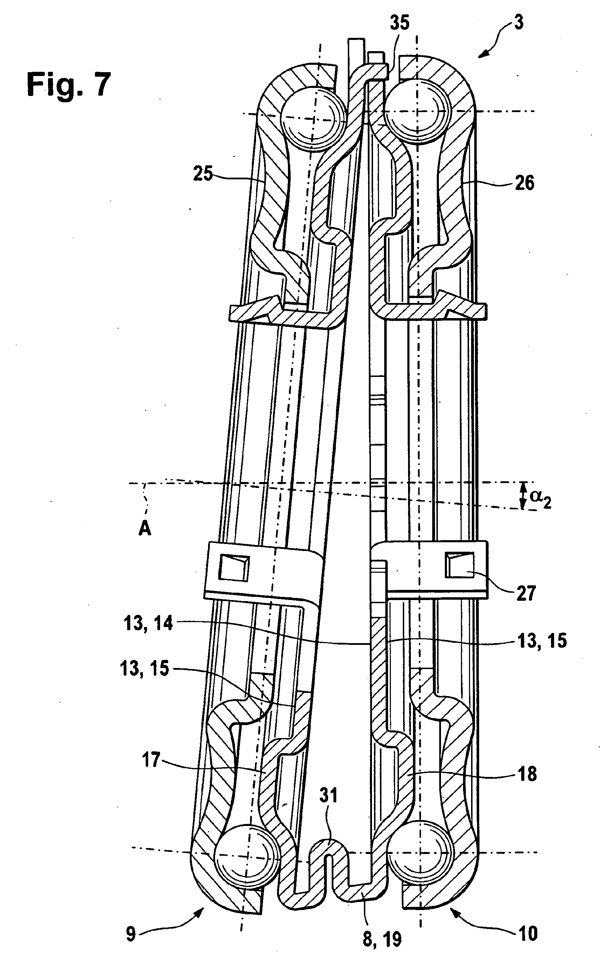

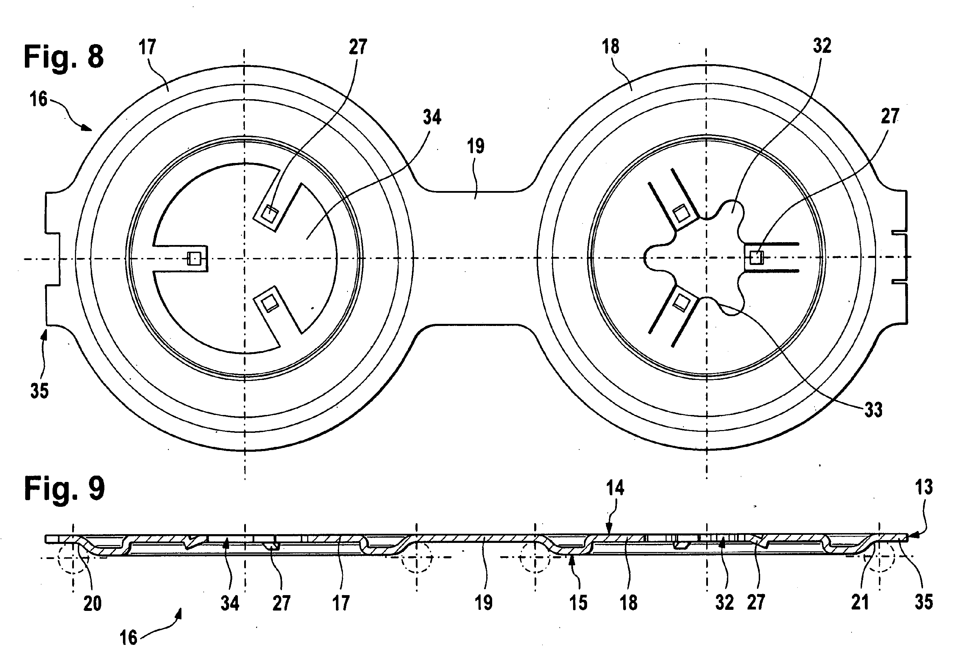

Details des Taumelscheibengetriebes 3 werden nachfolgend anhand der Figuren 2 a bis 3 erläutert. Im Ausführungsbeispiel nach den Figuren 2 a bis 3 ist der Taumelkörper 8 als Kunststoffteil ausgebildet, während er im Ausführungsbeispiel nach Figur 1 aus einer Leichtmetalllegierung hergestellt ist. Dies hat jedoch keinen Einfluss auf die Funktion des Taumelscheibengetriebes 3. Die weiteren Ausführungen beziehen sich daher, soweit nicht anders vermerkt, sowohl auf das Ausführungsbeispiel nach den Figuren 2 a bis 3 als auch auf das Ausführungsbeispiel nach Figur 1.

Die beiden Wälzlager 9, 10 des Taumelscheibengetriebes 3 weisen identische Abmessungen auf und sind als vollkugelige Axialschrägkugellager mit einem Druckwinkel von 60° ausgebildet. Die einzelnen, mit dem Bezugszeichen 13 gekennzeichneten Wälzkörper, nämlich Kugeln, der Wälzlager 9, 10 weisen einen Durchmesser D_{w} auf, der etwa 9% des Teilkreisdurchmessers D_{pw} der Wälzlager 9, 10 entspricht.

Die Wälzlager 9, 10 weisen jeweils einen Lagerinnenring 14, 15 sowie einen Lageraußenring 16, 17 auf, wobei der Lageraußenring 16 des ersten Wälzlagers 9 die Taumelscheibe und der Lageraußenring 17 des zweiten Wälzlagers 10 die Gehäusescheibe des Taumelscheibengetriebes 3 bildet. Während die Gehäusescheibe 17 symmetrisch zur Rotationsachse A des Taumelscheibengetriebes 3 angeordnet ist, schließt die Taumelscheibe 16 mit der Rotationsachse A einen Taumelwinkel α von ca. 8° ein. Der Taumelwinkel α wird ausschließlich durch die Form des Taumelkörpers 8 bestimmt und liegt in der Regel im Bereich zwischen 5° und 14°.

Die Lagerinnenringe 15, 14 sind an der motorseitigen Stirnseite 18 des Taumelkörpers 8 bzw. an der kolbenseitigen Stirnseite 19 des Taumelkörpers 8 mittels Schnappverbindungen 24 gehalten. Die Schnappverbindungen 24 sind hergestellt durch an den Taumelkörper 8 einstückig angeformte Haltenasen 25, welche zumindest geringfügig elastisch nachgiebig sind und am inneren Rand eines jeden Lagerinnenrings 14, 15 einrasten.

Die Lagerinnenringe 14, 15 weisen weiter jeweils drei einstückig an diese angeformte, symmetrisch um die Rotationsachse A angeordnete Haken 21 auf, welche Teile von Verbindungen 20 sind, die die Taumelscheibe 16 bzw. die Gehäusescheibe 17 drehbar, jedoch unverlierbar am jeweiligen Lagerinnenring 14, 15 halten. Damit sind auch die Wälzkörper 13 unverlierbar in den Wälzlagern 9, 10 geführt. Zugleich dienen die Schnapphaken 21 der unverdrehbaren Befestigung der Lagerinnenringe 14, 15 auf dem Taumelkörper 8.

Das gesamte Taumelscheibengetriebe 3 ist somit dazu geeignet, als vorgefertigte Baueinheit in die Axialkolbenpumpe 1 eingebaut zu werden. Der Taumelkörper 8 weist ein als Torx-Profil gestaltetes Innenprofil 22 auf, welches mittels Formschluss eine Drehmomentübertragung vom Wellenzapfen 7 auf den Taumelkörper 8 ermöglicht.

Die Lageraußenringe 16, 17 weisen jeweils einen konkaven, in axialer Draufsicht (Figur 2 b) ringförmigen Oberflächenbereich 23 auf, der im Fall der Taumelscheibe 16 der Anlage der balligen Fußstücke 12 der Kolben 5 dient. Der Krümmungsradius R des konkaven Oberflächenbereichs 23 beträgt ca. 20% des Teilkreisdurchmessers D_{pw}. Im Vergleich zu den halbkugeligen Oberflächen der Fußstücke 12 weist der konkave Oberflächenbereich 23 eine wesentlich weniger ausgeprägte Krümmung auf. Damit sind Kolben 5 mit identischer Form des Fußstücks 12 für einen weiten Bereich von Taumelwinkeln α, insbesondere für Taumelwinkel α zwischen 5° und 14°, zur Zusammenwirkung mit einheitlichen Lageraußenringen 16, 17 geeignet. Zusätzlich zur Erhöhung der Anzahl der Gleichteile für Taumelscheibengetriebe 3 mit unterschiedlichem Taumelwinkel α hat die konkave Gestaltung des Oberflächenbereichs 23 den Vorteil, die Stabilität des Lageraußenrings 16, 17 zu erhöhen. Im Vergleich zum Lageraußenring 16, 17 ist der Lagerinnenring 14, 15, welcher sich direkt am Taumelkörper 8 abstützt, nochmals dünnwandiger gestaltet. Sind die Wälzlager 9, 10, wie im Ausführungsbeispiel nach den Figuren 2 a bis 3, auf einen Taumelkörper 8 aus einem Isolierstoff aufgeschnappt, so ist hierdurch zugleich eine elektrische Isolation zwischen verschiedenen metallischen Bauteilen der Axialkolbenpumpe 1 gegeben.

### Bezugszeichenliste

- 1: Axialkolbenpumpe
- 2: Pumpengehäuse
- 3: Taumelscheibengetriebe
- 4: Welle
- 5: Kolben
- 6: Dichtring
- 7: Wellenzapfen
- 8: Taumelkörper
- 9: Wälzlager
- 10: Wälzlager
- 11: Druckfeder
- 12: Fußstück
- 13: Wälzkörper
- 14: Lagerinnenring
- 15: Lagerinnenring
- 16: Lageraußenring, Taumelscheibe
- 17: Lageraußenring, Gehäusescheibe
- 18: Stirnseite
- 19: Stirnseite
- 20: Verbindung
- 21: Haken
- 22: Innenprofil
- 23: konkaver Oberflächenbereich
- 24: Schnappverbindung
- 25: Haltenase

- α: Taumelwinkel
- A: Rotationsachse
- D_{w}: Durchmesser
- D_{pw}: Teilkreisdurchmesser
- R: Krümmungsradius

## Patentansprüche

1. Taumelscheibengetriebe, insbesondere für eine Axialkolbenpumpe (1), mit einem Taumelkörper (8), welcher zwischen einer Taumelscheibe (16) und einer Gehäusescheibe (17) drehbar gelagert ist, wobei die Taumelscheibe (16) einen Lageraußenring eines ersten Wälzlagers (9) und die Gehäusescheibe (17) einen Lageraußenring eines gleichartigen zweiten Wälzlagers (10) bildet, **dadurch gekennzeichnet, dass** jedes Wälzlager (9, 10) einen mit dem jeweiligen Lageraußenring (16, 17) unverlierbar gekoppelten Lagerinnenring (14, 15) aufweist, der an dem Taumelkörper (8) befestigt ist.

2. Taumelscheibengetriebe nach Anspruch 1, **dadurch gekennzeichnet, dass** die Wälzlager (9, 10) als Axialschrägkugellager ausgebildet sind.

3. Taumelscheibengetriebe nach Anspruch 2, **dadurch gekennzeichnet, dass** der Druckwinkel des Axialsctirägkugellagers (9, 10) mindestens 45° und höchstens 75° beträgt.

4. Taumelscheibengetriebe nach einem der Ansprüche 1 bis 3, **dadurch gekennzeichnet, dass** die Lagerringe (14, 15, 16, 17) als spanlos umgeformte Blechteile ausgebildet sind.

5. Taumelscheibengetriebe nach einem der Ansprüche 1 bis 4, **dadurch gekennzeichnet, dass** der Taumelkörper (8) aus Kunststoff gefertigt ist.

6. Taumelscheibengetriebe nach einem der Ansprüche 1 bis 4, **dadurch gekennzeichnet, dass** der Taumelkörper (8) aus Leichmetall, insbesondere einer Aluminiumlegierung, gefertigt ist.

7. Taumelscheibengetriebe nach einem der Ansprüche 1 bis 6, **dadurch gekennzeichnet, dass** die Wälzlager (9, 10) als vollkugelige Lager ausgebildet sind.

8. Taumelscheibengetriebe nach einem der Ansprüche 1 bis 7, **dadurch gekennzeichnet, dass** die Wälzkörper (13) der Wälzlager (9, 10) einen Durchmesser (D_{w}) aufweise, der weniger als 10% des Teilkreisdurchmessers (D_{pw}) des Wälzlagers (9, 10) entspricht.

9. Taumelscheibengetriebe nach einem der Ansprüche 1 bis 8, **dadurch gekennzeichnet, dass** der Lageraußenring (16, 17) außenseitig einen konkaven Oberflächenbereich (23) aufweist, welcher zur Zusammenwirkung mit einem balligen, insbesondere halbkugeligen Fußstück (12) eines Kolbens (5) vorgesehen ist.

10. Taumelscheibengetriebe nach Anspruch 9, **dadurch gekennzeichnet, dass** der Krümmungsradius (R) des konkaven Oberflächenbereichs (23) weniger als 25% des Teilkreisdurchmessers (D_{pw}) des Wälzlagers (9, 10) beträgt.

11. Taumelscheibengetriebe nach einem der Ansprüche 1 bis 10, **dadurch gekennzeichnet, dass** der Lagerinnenring (14, 15) mittels einer Schnappverbindung (24) mit dem Taumelkörper (8) verbunden ist.

12. Taumelscheibengetriebe nach Anspruch 11, **dadurch gekennzeichnet, dass** der Taumelkörper (8) eine einstückig mit diesem ausgebildete, insbesondere aus Kunststoff gefertigte, einen Teil der Schnappverbindung (24) mit dem Lagerinnenring (14, 15) bildende Haltenase (25) aufweist.

13. Taumelscheibengetriebe nach einem der Ansprüche 1 bis 12, **dadurch gekennzeichnet, dass** der Lagerinnenring (14, 15) mittels einer Verbindung (20) mit dem Lageraußenring (16, 17) drehbar, jedoch unverlierbar verbunden ist, wobei ein ein Teil der Verbindung (20) bildender Haken (21) des Lagerinnenrings (14, 15) zugleich der nicht drehbaren Halterung des Lagerinnenrings (14, 15) auf dem Taumelkörper (8) dient.

14. Taumelscheibengetriebe nach einem der Ansprüche 1 bis 13, **dadurch gekennzeichnet, dass** der Taumelkörper (8) einen Taumelwinkel (α) von mindestens 4° und höchstens 15° aufweist.

15. Taumelscheibengetriebe nach einem der Ansprüche 1 bis 14, **dadurch gekennzeichnet, dass** der Taumelkörper (8) ein Innenprofil (22) aufweist, welches mittels Formschluss eine Drehmomentübertragung zwischen einer Welle (4) und dem Taumelkörper (8) ermöglicht.

## Claims

1. Swashplate mechanism, in particular for an axial piston pump (1), with a wobble body (8) which is mounted rotatably between a swashplate (16) and a housing plate (17), the swashplate (16) forming a bearing outer ring of a first rolling bearing (9) and the housing plate (17) forming a bearing outer ring of an identical second rolling bearing (10), **characterized in that** each rolling bearing (9, 10) has a bearing inner ring (14, 15) which is coupled captively to the respective bearing outer ring (16, 17) and which is fastened to the wobble body (8).

2. Swashplate mechanism according to Claim 1,
**characterized in that** the rolling bearings (9, 10) are designed as axial angular ball bearings.

3. Swashplate mechanism according to Claim 2,
**characterized in that** the pressure angle of the axial angular ball bearing (9, 10) amounts to at least 45° and to at most 75°.

4. Swashplate mechanism according to one of Claims 1 to 3, **characterized in that** the bearing rings (14, 15, 16, 17) are designed as sheet-metal parts reshaped in a non-cutting manner.

5. Swashplate mechanism according to one of Claims 1 to 4, **characterized in that** the wobble body (8) is manufactured from plastic.

6. Swashplate mechanism according to one of Claims 1 to 4, **characterized in that** the wobble body (8) is manufactured from light metal, in particular an aluminium alloy.

7. Swashplate mechanism according to one of Claims 1 to 6, **characterized in that** the rolling bearings (9, 10) are designed as fully spherical bearings.

8. Swashplate mechanism according to one of Claims 1 to 7, **characterized in that** the rolling bodies (13) of the rolling bearings (9, 10) have a diameter (D_{w}) which corresponds to less than 10% of the pitch circle diameter (D_{pw}) of the rolling bearing (9, 10).

9. Swashplate mechanism according to one of Claims 1 to 8, **characterized in that** the bearing outer ring (16, 17) has on the outside a concave surface region (23) which is provided for cooperation with a crowned, in particular hemi-spherical foot piece (12) of a piston (5).

10. Swashplate mechanism according to Claim 9,
**characterized in that** the radius of curvature (R) of the concave surface region (23) amounts to less than 25% of the pitch circle diameter (D_{pw}) of the rolling bearing (9, 10).

11. Swashplate mechanism according to one of Claims 1 to 10, **characterized in that** the bearing inner ring (14, 15) is connected to the wobble body (8) by means of a snap connection (24).

12. Swashplate mechanism according to Claim 11,
**characterized in that** the wobble body (8) has a holding nose (25) which is formed in one piece with the latter, in particular is manufactured from plastic, and which forms part of the snap connection (24) to the bearing inner ring (14, 15).

13. Swashplate mechanism according to one of Claims 1 to 12, **characterized in that** the bearing inner ring (14, 15) is connected to the bearing outer ring (16, 17) rotatably, but captively, by means of a connection (20), a hook (21), forming part of the connection (20), of the bearing inner ring (14, 15) serving at the same time for the non-rotatable mounting of the bearing inner ring (14, 15) on the wobble body (8).

14. Swashplate mechanism according to one of Claims 1 to 13, **characterized in that** the wobble body (8) has a wobble angle (α) of at least 4° and at most 15°.

15. Swashplate mechanism according to one of Claims 1 to 14, **characterized in that** the wobble body (8) has an inner profile (22) which by means of a form fit allows torque transmission between a shaft (4) and the wobble body (8).

## Revendications

1. Transmission à plateau oscillant, en particulier pour une pompe à piston axial (1), comprenant un corps oscillant (8) qui est monté à rotation entre un plateau oscillant (16) et un plateau de boîtier (17), le plateau oscillant (16) formant une bague extérieure de palier d'un premier palier à roulement (9) et le plateau de boîtier (17) formant une bague extérieure de palier d'un deuxième palier à roulement de même type (10), **caractérisée en ce que** chaque palier à roulement (9, 10) présente une bague intérieure de palier (14, 15) accouplée de manière imperdable à chaque bague extérieure de palier (16, 17), et fixée au corps oscillant (8).

2. Transmission à plateau oscillant selon la revendication 1, **caractérisée en ce que** les paliers à roulement (9, 10) sont réalisés sous forme de roulement à billes axial à contact oblique.

3. Transmission à plateau oscillant selon la revendication 2, **caractérisée en ce que** l'angle de pression du roulement à billes axial à contact oblique (9, 10) vaut au moins 45° et au plus 75°.

4. Transmission à plateau oscillant selon l'une quelconque des revendications 1 à 3, **caractérisée en ce que** les bagues de palier (14, 15, 16, 17) sont réalisées sous forme de pièces en tôle façonnées sans enlèvement de copeaux.

5. Transmission à plateau oscillant selon l'une quelconque des revendications 1 à 4, **caractérisée en ce que** le corps oscillant (8) est fabriqué en plastique.

6. Transmission à plateau oscillant selon l'une quelconque des revendications 1 à 4, **caractérisée en ce que** le corps oscillant (8) est fabriqué en métal léger, en particulier un alliage d'aluminium.

7. Transmission à plateau oscillant selon l'une quelconque des revendications 1 à 6, **caractérisée en ce que** les paliers à roulement (9, 10) sont réalisés sous forme de palier à billes pleines.

8. Transmission à plateau oscillant selon l'une quelconque des revendications 1 à 7, **caractérisée en ce que** les corps de roulement (13) des paliers à roulement (9, 10) présentent un diamètre (D_{w}) qui correspond à moins de 10% du diamètre du cercle partiel (D_{pw}) du palier à roulement (9, 10).

9. Transmission à plateau oscillant selon l'une quelconque des revendications 1 à 8, **caractérisée en ce que** la bague extérieure de palier (16, 17) présente, du côté extérieur, une région de surface concave (23) qui est prévue pour coopérer avec une pièce de base (12) d'un piston (5), de forme bombée, notamment de forme hémisphérique.

10. Transmission à plateau oscillant selon la revendication 9, **caractérisée en ce que** le rayon de courbure (R) de la région de surface concave (23) vaut moins de 25% du diamètre du cercle partiel (D_{pw}) du palier à roulement (9, 10).

11. Transmission à plateau oscillant selon l'une quelconque des revendications 1 à 10, **caractérisée en ce que** la bague intérieure de palier (14, 15) est connectée au corps oscillant (8) au moyen d'une connexion par encliquetage (24).

12. Transmission à plateau oscillant selon la revendication 11, **caractérisée en ce que** le corps oscillant (8) présente un nez de retenue (25) réalisé d'une seule pièce avec celui-ci, notamment en plastique, formant une partie de la connexion par encliquetage (24) avec la bague intérieure de palier (14, 15).

13. Transmission à plateau oscillant selon l'une quelconque des revendications 1 à 12, **caractérisée en ce que** la bague intérieure de palier (14, 15) est connectée à la bague extérieure de palier (16, 17) de manière rotative, mais toutefois imperdable, au moyen d'une connexion (20), un crochet (21) de la bague intérieure de palier (14, 15) formant une partie de la connexion (20) servant en même temps à la fixation non rotative de la bague intérieure de palier (14, 15) sur le corps oscillant (8).

14. Transmission à plateau oscillant selon l'une quelconque des revendications 1 à 13, **caractérisée en ce que** le corps oscillant (8) présente un angle d'oscillation (α) d'au moins 4° et d'au plus 15°.

15. Transmission à plateau oscillant selon l'une quelconque des revendications 1 à 14, **caractérisée en ce que** le corps oscillant (8) présente un profil interne (22) qui permet, au moyen d'un engagement par correspondance géométrique, un transfert de couple entre un arbre (4) et le corps oscillant (8).
